# EUROPEAN PATENT SPECIFICATION

(11) **EP 4 320 897 B1**
(45) Date of publication and mention of the grant of the patent: **25.02.2026**
(21) Application number: 22723843.3
(22) Date of filing: 01.04.2022
(51) Int. Cl.: H04W 12/082, H04W 12/60, H04W 12/00, H04W 12/088

(54) **METHODS, APPARATUS, AND SYSTEMS FOR UNCREWED/UNMANNED AERIAL SYSTEM (UAS) EVENT/EXCEPTION AND POLICY CONTROL EXPOSURE SERVICES**
VERFAHREN, VORRICHTUNG UND SYSTEME FÜR UNBEMANNTE LUFTSYSTEMEREIGNIS-/AUSNAHMEDIENSTE UND RICHTLINIENSTEUERUNGSEXPOSITIONSDIENSTE
PROCÉDÉS, APPAREIL ET SYSTÈMES POUR DES SERVICES D'EXPOSITION DE COMMANDE D'ÉVÉNEMENT/EXCEPTION DE SYSTÈME VOLANT SANS ÉQUIPAGE/SANS PILOTE EMBARQUÉ (UAS) ET DE POLITIQUE

(30) Priority: 05.04.2021 US 202163170782 P; 05.05.2021 US 202163184290 P
(43) Date of publication of application: 14.02.2024
(73) Proprietor: InterDigital Patent Holdings, Inc., Wilmington, DE 19809 (US)
(72) Inventor: FERDI, Samir, Montreal, Québec H3A 3G4 (CA); WANG, Guanzhou, Montreal, Québec H3A 3G4 (CA); MONRAD, Atle, 4820 Froland (NO)
(74) Representative: 2SPL Patentanwälte PartG mbB
(86) International application number: PCT/US2022/023084
(87) International publication number: WO 2022/216549

(56) References cited:
- WO-A1-2021/041143
- US-A1- 2017 255 194
- US-A1- 2019 051 190
- CHINA MOBILE: "KI#1, KI#2, KI#3, KI#7,Sol. 5 update: 5G LAN can be used to support the communication between paired UAV and networked UAV Controller", vol. SA WG2, no. Electronic; 20201012 - 20201023, 2 October 2020 (2020-10-02), XP051938039, Retrieved from the Internet <URL:https://ftp.3gpp.org/tsg_sa/WG2_Arch/TSGS2_141e_Electronic/Docs/S2-2006941.zip S2-2006941.docx> [retrieved on 20201002]
- "3rd Generation Partnership Project; Technical Specification Group Services and System Aspects; Study on supporting Unmanned Aerial Systems (UAS) connectivity, Identification and tracking (Release 17)", 30 November 2020 (2020-11-30), XP051963942, Retrieved from the Internet <URL:https://ftp.3gpp.org/tsg_sa/WG2_Arch/Latest_SA2_Specs/Latest_draft_S2_Specs/23754-120.zip 23754-120_RM.docx> [retrieved on 20201130]

## Description

This application claims the benefit of U.S. Provisional Application No. 63/184290, filed May 5, 2021, and claims the benefit of U.S. Provisional Application No. 63/170782, filed April 5, 2021.

### FIELD

Embodiments disclosed herein generally relate to wireless communications and, for example to methods, apparatus and systems uncrewed/unmanned aerial system (UAS) event/exception and policy control exposure services.

### RELATED ART

In 3GPP documents titled "KI#1, KI#2, KI#3, Kl#7,Sol. 5 update: 5G LAN can be used to support the communication between paired UAV and networked UAV Controller", S2-2006941, CHINA MOBILE, 2 October 2020 and "3rd Generation Partnership Project; Technical Specification Group Services and System Aspects; Study on supporting Unmanned Aerial Systems (UAS) connectivity, Identification and tracking (Release 17)", 30 November 2020, communications for control of Uncrewed/Unmanned Aerial Vehicles (UAVs) are specified.

### SUMMARY

The invention is defined by the independent claims that accompany this disclosure. Any examples and embodiments of the description not falling within the scope of the claims do not form part of the invention as defined by the independent claims.

In certain representative embodiments, methods, apparatus and systems may be implemented to enable immediate or deferred network actions based on UAV operations, network events, network, and operator rules/policies, among other operators.

In certain representative embodiments, methods, apparatus and systems may be implemented to provide UAS event/exception and policy control exposure services.

### BRIEF DESCRIPTION OF THE DRAWINGS

A more detailed understanding may be had from the detailed description below, given by way of example in conjunction with drawings appended hereto. Figures in the description, are examples. As such, the Figures and the detailed description are not to be considered limiting, and other equally effective examples are possible and likely. Furthermore, like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating a logical 5GS and EPS architecture for a UAV;
FIG. 3 is a diagram illustrating a representative UAS event subscription procedure with a USS/UTM;
FIG. 4 is a diagram illustrating a representative UAS event/exception notification procedure with a USS/UTM;
FIG. 5 is a diagram illustrating a representative UAS control procedure;
FIG. 6 is a flowchart illustrating a representative procedure to control a revocation of a connection of a UAV;
FIG. 7 is a flowchart illustrating a representative procedure to control a revocation of a connection of a UAV;
FIG. 8 is a flowchart illustrating a representative procedure to provide a UAV policy control exposure service to a UAV control entity; and
FIG. 9 is a flowchart illustrating a representative procedure implemented by an uncrewed/unmanned aerial system (UAS) control entity;

### DETAILED DESCRIPTION

### Example Networks for Implementation of the Embodiments

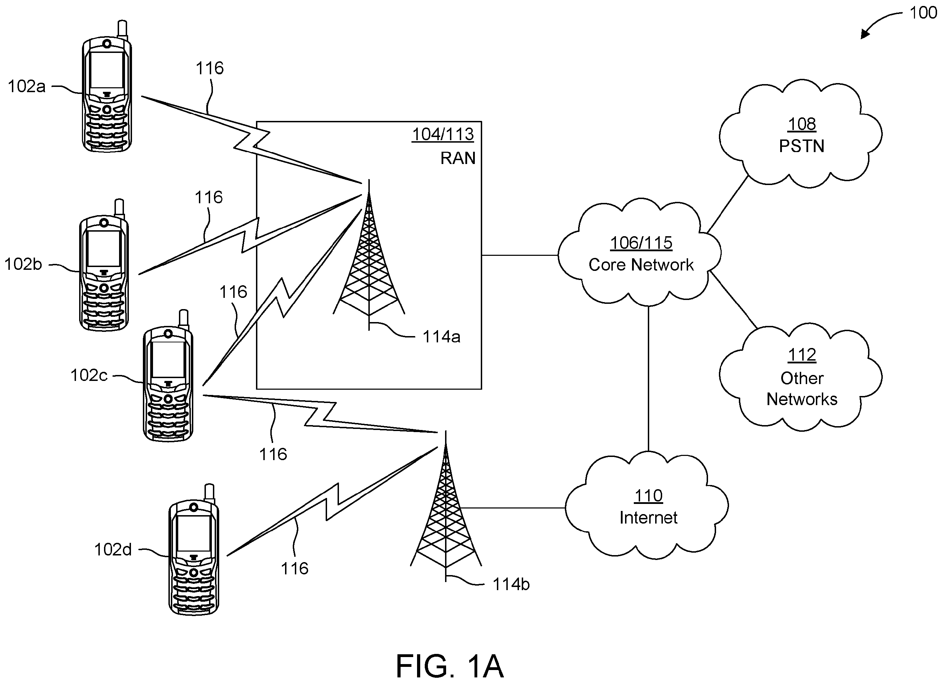

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B (end), a Home Node B (HNB), a Home eNode B (HeNB), a gNB, a NR Node B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

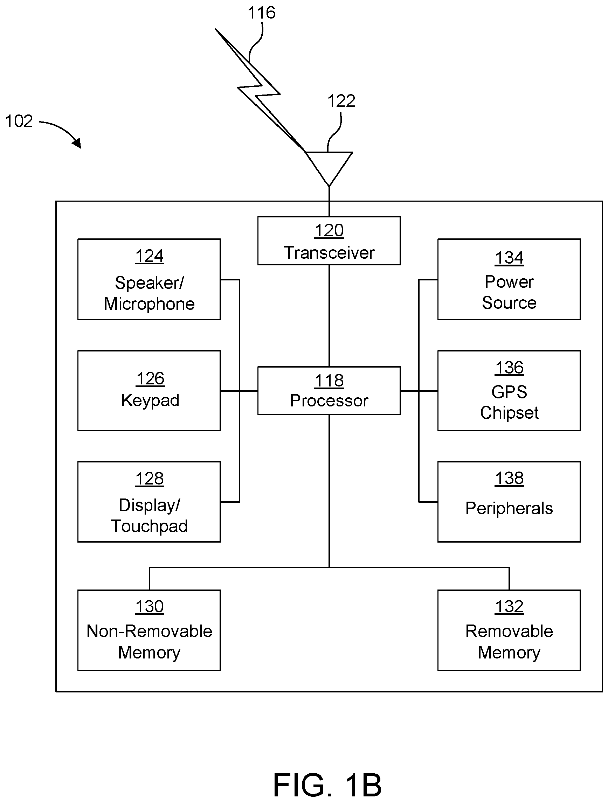

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickelcadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The processor 118 of the WTRU 102 may operatively communicate with various peripherals 138 including, for example, any of: the one or more accelerometers, the one or more gyroscopes, the USB port, other communication interfaces/ports, the display and/or other visual/audio indicators to implement representative embodiments disclosed herein.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

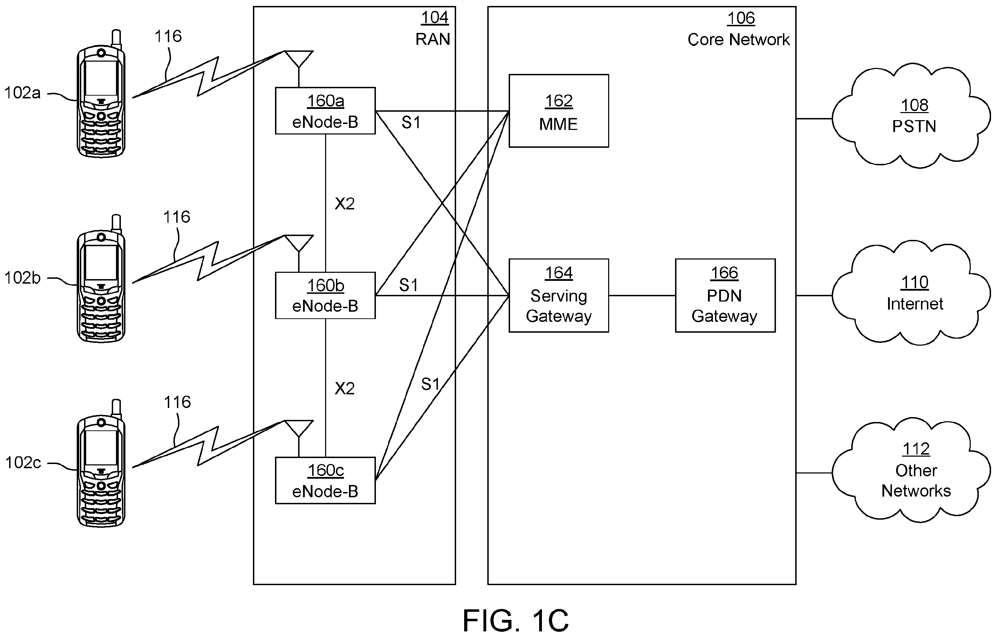

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode Bs 160a, 160b, 160c, though it will be appreciated that the RAN 104 may include any number of eNode Bs while remaining consistent with an embodiment. The eNode Bs 160a, 160b, 160c may each include one or more transceivers for communicating with the WTRUs 102a, 102b, 102c over the air interface 116. In one embodiment, the eNode Bs 160a, 160b, 160c may implement MIMO technology. Thus, the eNode B 160a, for example, may use multiple antennas to transmit wireless signals to, and/or receive wireless signals from, the WTRU 102a.

Each of the eNode Bs 160a, 160b, 160c may be associated with a particular cell (not shown) and may be configured to handle radio resource management decisions, handover decisions, scheduling of users in the UL and/or DL, and the like. As shown in FIG. 1C, the eNode Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped onto the two 80 MHz channels, and the data may be transmitted by a transmitting STA. At the receiver of the receiving STA, the above-described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

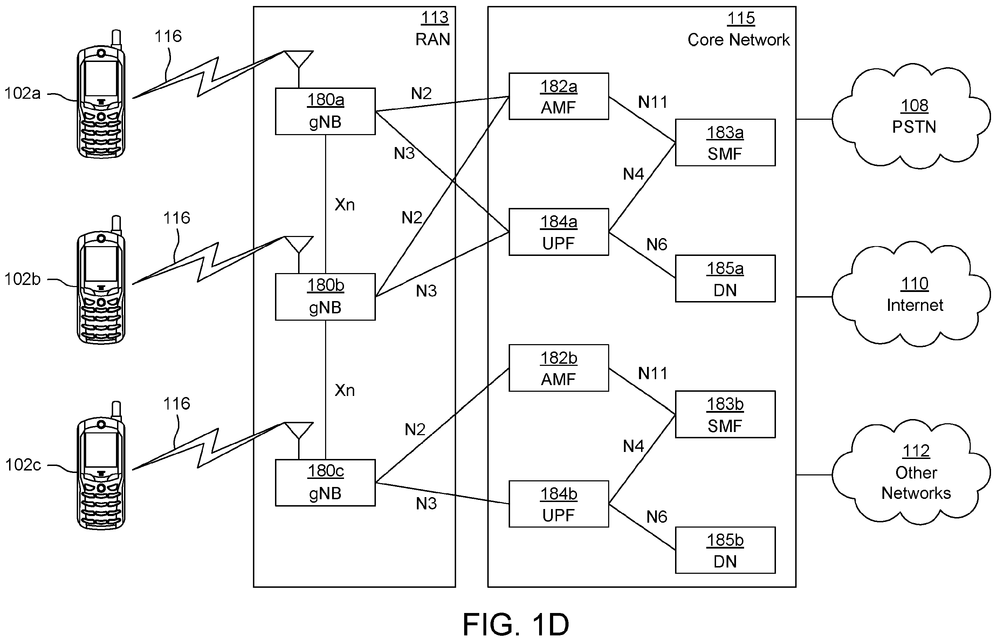

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode Bs 160a, 160b, 160c. For example, WTRUs 102a, 102b, 102c may implement DC principles to communicate with one or more gNBs 180a, 180b, 180c and one or more eNode Bs 160a, 160b, 160c substantially simultaneously. In the non-standalone configuration, eNode Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements is depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different Protocol Data Unit (PDU) sessions with different requirements), selecting a particular SMF 183a, 183b, management of the registration area, termination of Non-Access Stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency communication (URLLC) access, services relying on enhanced mobile (e.g., massive mobile) broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of FIGS. 1A-1D, and the corresponding description of FIGS. 1A-1D, one or more, or all, of the functions described herein with regard to one or more of: WTRU 102a-d, Base Station 114a-b, eNode B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

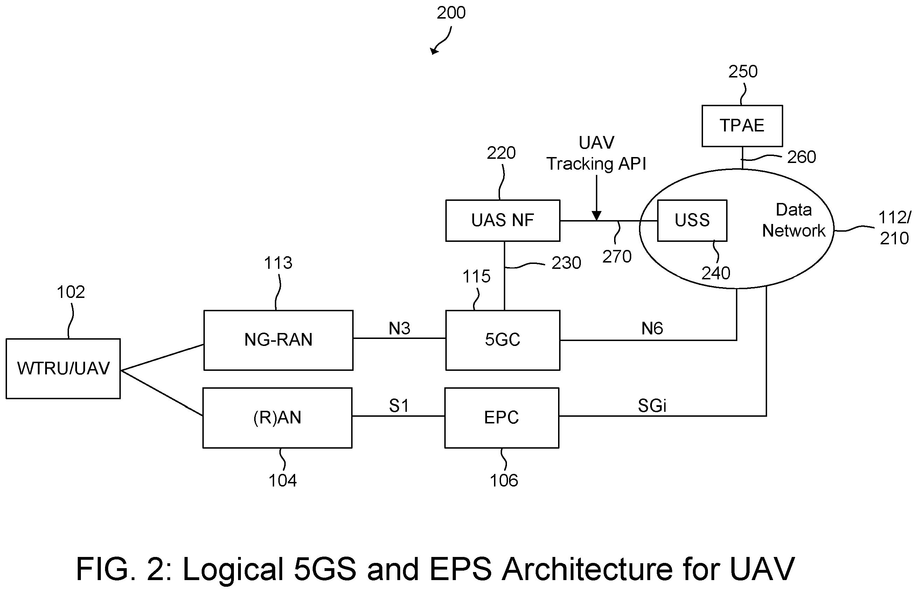

FIG. 2 is a diagram illustrating a logical 5G System (5GS) and Evolved Packet System (EPS) architecture for a UAV (e.g., a WTRU 102 associated with a UAV).

Referring to FIG. 2, the representative 5GS and EPS architecture 400 may include, for example a WTRU/UAV 102 may communicate using any of: (1) the EPS (for example via a Radio Access Network (RAN) 104 and/or (the 5GS (for example via a next generation (NG) RAN 113. The RAN 104 may interface with the evolved packet core (EPC) network 106 using a S1 interface. The NG-RAN 113 may interface with the 5G core (5GC) network 115 using a N3 interface. The 5GC network 115 may interface with a data network 112/410 using a N6 interface and may interface with an Unmanned Aircraft System (UAS) Network Function (NF) 220 using an interface 230. The EPC network 106 may interface with the data network 112/210 using a SGi interface. The data network 112/210 may include an UAS Service Supplier (USS) 240 (e.g., a network/function). The data network 112/210 may interface with a third party authorized entity (TPAE) 250 via an interface 260. The UAS NF 220 may interface with the USS 240 using an interface 270. The interface 270 may enable a UAV tracking API.

For example, UAV location tracking methods, apparatus, operations and/or procedures may be implemented in which an Unmanned Aircraft System (UAS) Service Supplier (USS)/UAS Traffic Management (UTM) (USS/UTM) 240 may request, from a system (e.g., a 3GPP system) via the UAS NF 220, a location of a given UAV or its presence in a given area. A UAV may be granted network connectivity for UAS operations, if the UAV has a valid "Aerial" subscription (from the UDM) and was successfully authenticated and authorized by the USS/UTM 240 (e.g., after a successful USS UAV Authorization/Authentication (UUAA) procedure).

The slice used for UAS operations may be subject to a Network Slice Specific Authentication and Authorization (NSSAA). For example, network connectivity for UAS operations may be granted if (e.g., only if) the UAV is authorized to use that slice by an Authentication, Authorization and Accounting-Server (AAA-S). The Data Network (DN) 112/210 used for UAS operations may use and/or may require PDU Session secondary authentication. The network connectivity for UAS operations may be granted if (e.g., only if) the UAV is authorized to access that DN 112/210 by the Data Network Authentication, Authorization and Accounting (DN-AAA) (e.g., a server). The UAV flight path may be established/authorized by the USS/UTM 240 independently from the network coverage and/or service areas along that path.

In certain representative embodiments, if an "Aerial" subscription is revoked, the UAV should not continue to operate, however the network may not or shall not release unilaterally the UAV connectivity for safety and/or Mobile Network Operator (MNO) liability reasons.

As similar situation arises, for example if a slice used for UAS operations is subject to Network Slice Specific Authentication and Authorization (NSSAA) and is being revoked by the AAA-S, for a regular WTRU 102, the AMF 182 may trigger a release of associated Packet Data Unit (PDU) sessions (e.g., all associated PDU sessions) and may de-register (e.g., perform a de-registration) if the slice is the only slice available. Such a release and/or de-registration may need to be controlled/delayed/avoided/modified, for example to avoid/reduce safety and/or liability concerns associated with UAV mobility and/or accidents, among others.

In certain representative embodiments the Command and Control (C2) link Quality of Service (QoS) along a UAV flight path may present significant variations (e.g., exceeding a threshold variation and/or may cause Radio Link Failure (RLF)) which may generate/lead to unpredictable UAV behavior (e.g., a loss of UAV control) and/or the inability for the network to continue providing real time UAV location information to the USS/UTM 240.

In certain representative embodiments, methods, apparatus, system and/or procedures may be implemented for a Connectivity Event/Exception exposure service provided at a UAS NF 220. For example, the UAS NF 220 may receive a monitoring request from an USS/UTM 240 for a UAV. The request may include the 3GPP UAV ID (e.g., Generic Public Subscription Identifier, (GPSI)), one or more IP addresses of the UAV (e.g., IP addresses of the PDU Sessions used by the UAV), and/or the types of events the USS/UTM 240 is subscribing to (e.g., connectivity service authorization). The UAS NF 220 may subscribe with the appropriate NF serving the UAV (e.g., the AMF 182 and/or the SMF 183) based on the requested events (e.g., with the AMF indicating the 3GPP UAV ID, and/or the connectivity service authorization event). For example, the UAS NF 220 may receive an event report from an NF (e.g., the AMF) including the 3GPP UAV ID, the event type and/or additional information related to the event (e.g., UAS connectivity service not authorized). The UAS NF 220 may send an event report to the subscribed USS/UTM 240 including the 3GPP UAV ID and/or the above event information.

In certain representative embodiments, methods, apparatus, system and/or procedures may be implemented for a Policy control exposure service provided at a UAS NF 220. For example, the UAS NF 220 may receive a policy creation/update request from an USS/UTM 240. The policy creation/update request may include any of the following: the monitored UAV's 3GPP UAV ID, the one or more IP addresses of the PDU Session(s) used by the UAV, the types of events the USS/UTM 240 subscribes to, and rules/actions associated with such events. The UAS NF 220 may send a request message to a PCF to install or update the USS/UTM policy. The USS/UTM policy may apply at a PDU Session (e.g., Session Management) level and/or at a WTRU (e.g., Access Management) level. The PCF may provide the AMF 182/SMF 183 with event(s)/trigger(s) indicating the WTRU/PDU Session identifier for which UAV access and connectivity policy control apply (e.g., following policy association procedure between the AMF 182/SMF 183 and the PCF). When the relevant event occurs for the UAV, the AMF182/SMF 183 may interact/communicate with the PCF reporting the event type (e.g., connectivity authorization revocation) and associated information. The PCF may provide one or more actions to be performed to the AMF182/SMF 183 (e.g., to hold/defer network resources release upon USS/UTM confirmation/command).

### Representative Procedures to Support Termination or Loss of UAS connectivity Service Availability While Reducing/Minimizing Safety Risks / Comply with Aviation Domain Safety Protocols

A Connectivity Event/Exception exposure service may be provided at a UAS NF 220 and the UAS NF 220 may any of:
(1) receive a monitoring request from an USS/UTM 240 for a UAV (for example, the monitoring request may include any of: (i) a UAV ID (e.g., a 3GPP UAV ID), (ii) one or more UAV IP addresses, and/or (iii) one or more types of events the USS/UTM 240 is subscribing to (e.g., the connectivity service authorization);
(2) subscribe with an appropriate network function (NF) serving the UAV (e.g., an AMF 182 or a SMF 183) based on the requested events (e.g., may subscribe with the AMF 182 indicating the 3GPP UAV ID, and/or a connectivity service authorization event);
(3) receive an event report from the NF (e.g., the AMF 182) including any of: (i) the UAV ID, (ii) the event type, and/or (iii) information (e.g., additional information) related to the event (e.g., UAS connectivity service not authorized), among others; and/or
(4) send an event report to the subscribed USS/UTM 240 including the UAV ID and/or the information related to the event, among others.

A Policy control exposure service may be provided at the UAS NF 220 and the UAS NF 220 may any of:
(1) receive a policy creation/update request from the USS/UTM 240 (for example the request may include/indicate any of: (i) the UAV ID of the monitored UAV (e.g., the 3GPP UAV ID), (ii) one or more IP addresses of the one or more PDU Sessions used by the UAV, (iii) one or more types of events, (iv) the USS/UTM 240, and/or (v) one or more rules/actions associated with such events); and/or
(2) send a request message to a Policy Control Function (PCF), for example to install or to update the USS/UTM policy (for example, the policy may apply for a PDU Session (e.g., Session Management) level and/or at a WTRU (e.g., Access Management) level), among others.

The PCF may provide the AMF 182/SMF 183 with one or more events/one or more triggers indicating the WTRU/PDU Session identifier for which UAV access and/or connectivity policy control can apply (e.g., following a policy association procedure between the AMF182/SMF 183 and the PCF). When the relevant event occurs for the UAV, the AMF182/SMF 183 may interact with (e.g., communicate with) the PCF to report the event type (e.g., the connectivity authorization revocation) and/or associated information, among others. The PCF may provide an action to be performed to the AMF182/SMF 183 (e.g., to hold/to defer network resources release upon USS/UTM confirmation/command).

A Connectivity Event/Exception exposure service may be provided at the UAS NF 220. The event/exception exposure service may be used in the context of autonomous mobility (e.g., drones and other autonomous vehicles) and/or in other use cases/verticals (e.g., including autonomous vehicles use cases, emergency use cases, and/or URLLC use cases such as for robotic surgeries, among others). In general, the USS/UTM 240 below may be a third-party server whose business logic (e.g., which may be mission critical) may depend on the connectivity status of the WTRU/UAV 102.

After or during a UUAA procedure for a WTRU/UAV 102, a UAS NF 220 may receive a subscription/monitoring request from the USS/UTM. The request may include any of: (1) a UAV ID (e.g., the monitored UAV's 3GPP UAV ID), (2) one or more IP addresses of the UAV, (3) one of more types of events the USS/UTM 240 may want to be or is to be notified about (e.g., for connectivity service authorization/availability and/or for C2 link QoS variation), and/or (4) additional control parameters based on the type or types of events (e.g., one or more filtering parameters and/or one or more QoS thresholds, among others).The event types requested by the USS/UTM 240 may be generic such as "UAS communication service availability". The UAS NF 220 may map the requested generic event types to one or more "internal" network specific event types as described below.

The UAS NF 220 may send a subscription request to the appropriate NF serving the UAV (e.g., AMF or SMF) based on the requested events including the 3GPP UAV ID and event parameters received from the USS/UTM 240. The UAS NF 220 may map a requested generic event from USS/UTM 240 to one or more network event types and one or more NFs. For example, the UAS NF 220 may map a requested generic event from the USS/UTM 240 to one or more network event types and may subscribe to the event notifications with one or more corresponding NFs.

The UAS NF 220 may send a subscription request to an appropriate NF serving the UAV (e.g., an AMF and/or a SMF) based on the requested events including any of: (1) the UAV ID (e.g., a 3GPP UAV ID or another identifier) and/or (2) event parameters, for example, received from the USS/UTM 240. For example, the UAS NF 220 may subscribe with the AMF indicating any of: (1) the UAV ID (e.g., the 3GPP UAV ID or another identifier), (2) an authorization (e.g., a "connectivity service authorization") and/or (3) an event type (e.g., a "registration status" event type). The UAS NF 220 may subscribe with the SMF and may indicate any of: (1) the UAV ID (e.g., the 3GPP UAV ID or another identifier), (2) one or more IP of the UAV MAC, (3) the event type (e.g., "C2 link status" event type) and/or (4) control parameters.

The UAS NF 220 may receive an event report from an NF (e.g., the AMF) including (1) the UAV ID (e.g., the 3GPP UAV ID or another identifier), (2) the event type and/or (3) meta information related to the event. For example, an event report may indicate any of: (1) the authorization type (e.g., the connectivity service authorization type) and/or (2) a cause for authorization revocation (e.g., an "Aerial" subscription and network/slice access revocation).

The UAS NF 220 may send the event report to the subscribed USS/UTM 240 including any of the event information described herein. The USS/UTM 240 may take appropriate action in response to the event report (e.g., may terminate the UAV mission and/or trigger UAV Authorization and Authentication (A&A) revocation with the network).

For example, to enable dynamic control over the behavior at the AMF182/SMF 183 with regards to network access and connectivity events impacting the UAV, the UAS NF 220 may provide an exposure service for policy control (e.g., used by the USS/UTM 240). The policy control exposure service may be used in the context of other use cases/verticals (e.g., autonomous vehicles). In general, the USS/UTM 240 may be a third-party server whose business logic (e.g., functions, capabilities, and/or mission critical aspects) may use/require the network to enforce a policy with regards to connectivity or registration status of the WTRU 102.

After or during a UUAA procedure for a WTRU/UAV 102, the UAS NF 220 may receive a policy creation/update request from the USS/UTM 240. The request may include any of: (1) the monitored UAV ID (e.g., the 3GPP UAV ID and/or another identifier), (2) the one or more IP addresses of the one or more PDU Sessions used by the UAV, and/or (3) the types of events the USS/UTM 240 and rules/actions associated with such events, among others. For example, when network/slice/DN access authorization is revoked, the policy rule may indicate whether the AMF182/SMF 183 may release network resource with or without prior confirmation from the USS/UTM 240.

The UAS NF 220 may send a request message to a PCF to install and/or update the USS/UTM policy. The policy may apply at a PDU Session (e.g., Session Management) level and/or at a WTRU (e.g., Access Management) level.

The PCF may provide the AMF182/SMF 183 with one or more events and/or one or more triggers indicating the WTRU/PDU Session identifier for which UAV access and/or connectivity policy control apply (e.g., following the policy association procedure between the AMF182/SMF 183 and the PCF). When a relevant event occurs for the UAV, the AMF182/SMF 183 may interact with (e.g., may communicate with) the PCF that reports the event type (e.g., connectivity authorization revocation) and/or the associated information. The PCF may provide an action to be performed to the AMF182/SMF 183 (e.g., to hold and/or to defer network resources release upon a USS/UTM confirmation/command).

### Representative Event/Exception Subscription Procedure

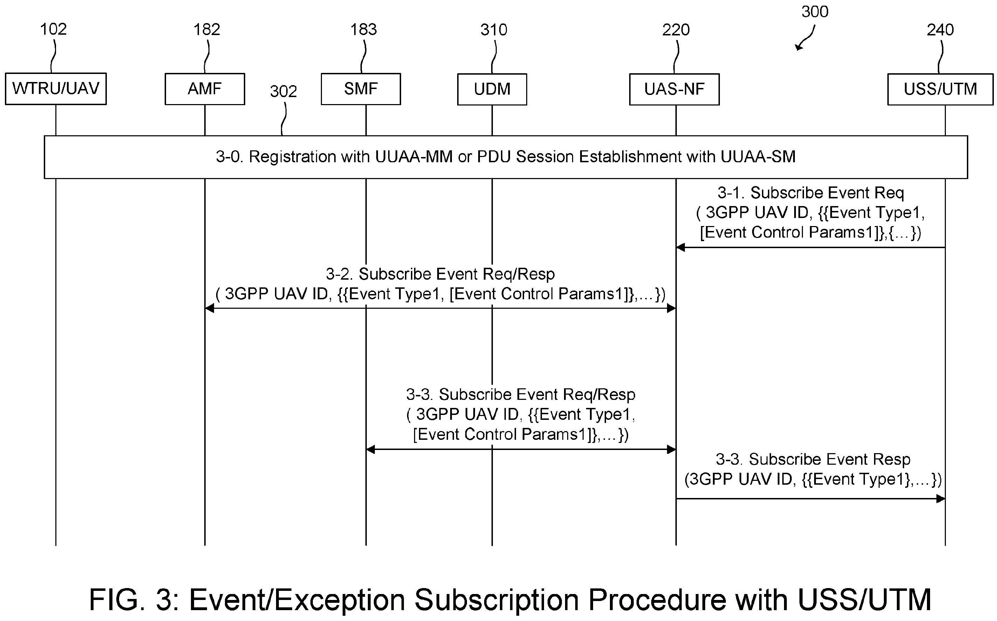

FIG. 3 is a diagram illustrating a representative UAS event subscription procedure with an USS/UTM following an USS UAV Authentication and Authorization (UUAA) Mobility Management (MM) (UUAA-MM) procedure.

Referring to FIG. 3, the event/exception subscription procedure 300 may include any of the following operations.
(1) At operation 3.0, the WTRU/UAV 102 may be registered with the network and may have completed a UUAA procedure with a USS/UTM 240 successfully (e.g., during Registration with UUAA-MM or PDU Session Establishment with UUAA-Session Management (SM) (UUAA-SM). The UAV 102 may establish a PDU Session used for C2 communications.
(2) At operation 3.1, the UAS NF 220 may receive a Subscribe Event Request message from the USS/UTM 240. The message may include/indicate any of: the UAV ID (e.g., the 3GPP UAV ID or another identifier), one or more IP addresses of the UAV, one or more event types and/or one or more event control parameters. The event type of interest in the USS/UTM's Subscribe Event Request may be a generic event type, such as an "UAS communication service not available/authorized" event or "abnormal network events", and/or the event type of interest may be one or a multiple of specific event types, such as "WTRU is deregistered from the network", "Aerial Subscription is revoked", or "UAS service-related network slice authorization is revoked", etc. If the received event type is generic, the UAS NF 220 may translate the generic event type to one or more multiple specific event types. Depending on the event types received and/or resulting from the translation (e.g., after being translated), the UAS NF 220 (or the NEF) may determine the network functions (e.g., the AMF 182, the SMF 183, and/or the UDM, etc.) where or by which those events may be triggered and may send the corresponding event subscription requests to one or more network functions.
(3) At operation 3.2, the UAS NF 220 may send a Subscribe Event Request message to the AMF 182 including/indicating any of: the information/indications/parameters received from the USS/UTM 240. The UAS NF 220 may receive a response including/indicating the one or more event types supported. An example of event type of interest may be an event type associated with or triggered by the WTRU/UAV 102 being deregistered (e.g., unexpectedly) from the network. In that case, the USS/UTM 240 may be informed of the last known UAV position when the event occurs (e.g., to estimate position of a potential crash landing). Another example of an event type may be related to authorization for Aerial operations or access to the network and/or slice (e.g., when or at the time that the authorization is being revoked).
(4) At operation 3-3, the UAS NF 220 may send a Subscribe Event Request message to the SMF 183 including/indicating the information/indications and/or parameters received from the USS/UTM 240. An example of event type of interest may be an event type associated with or triggered by the network detecting that the WTRU/UAV radio link used for C2 communication is lost (e.g., radio link failure) or significantly compromised (the SINR or signal strength level close to not meeting or not meeting acceptable levels (e.g., not satisfying a threshold level)). For example, the USS/UTM 240 may be informed of the last known UAV position when an event occurs. Another event type may be related to authorization for access to a Data Network 210 used for communications with the USS/UTM 240 or a UAV-C (e.g., when authorization is being revoked).

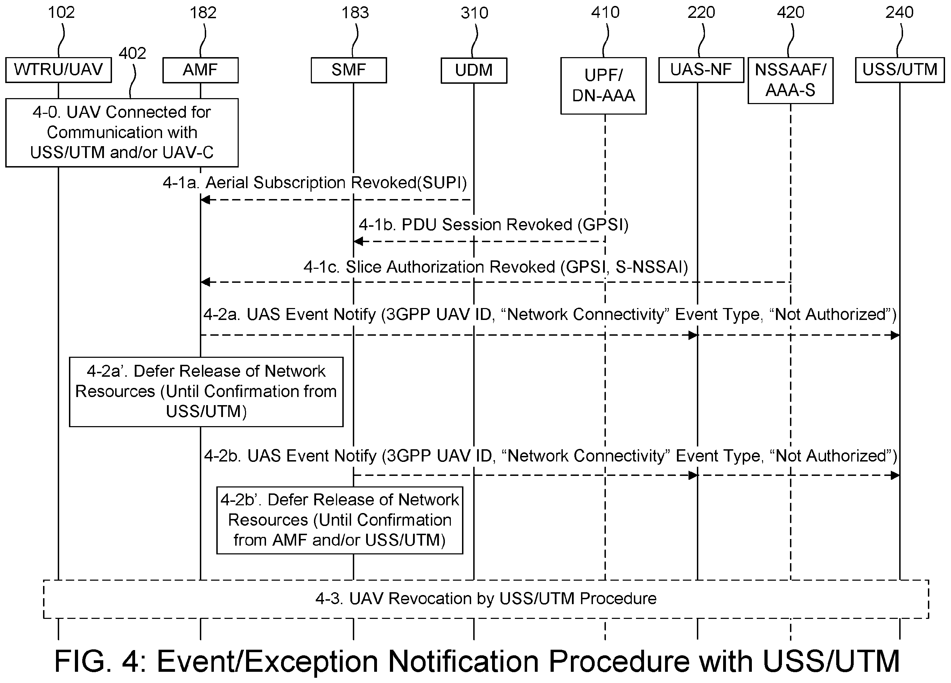

FIG. 4 is a diagram illustrating a representative UAS event/exception notification procedure with a USS/UTM 240 following a network event. The US event/exception procedure may include any of the following.
(1) At operation 4-0, the WTRU/UAV 102 may be connected for communication with a USS/UTM 240 and/or a UAV-C. Below are some examples of events that can possibly impact the UAV connectivity:
(2) At operation 4-1a, the AMF 182 may receive a message from UDM 310 indicating that an Aerial subscription is revoked.
(3) At operation 4-1b, the SMF 183 may receive a PDU Session revocation request from an UPF/DN/AAA (e.g., the DN-AAA 410 via the UPF 184).
(4) At operation 4-1c, the AMF may receive a Slice authorization revocation request from an AAA-S/NSSAAF 420 (e.g., the AAA-S via the NSSAAF).
Based on the event type above the appropriate NF may notify the UAS NF 220/USS 240 as follows:
(5) At operation 4-2a, the AMF 182 may notify the UAS NF 220 (for example of the network event/event type and/or meta information), which may then forward the information (e.g., the information regarding the network event indicating the type and/or the meta information (e.g., that network connectivity is not authorized) to the USS/UTM 240. If the USS/UTM 240 subscribes for a generic event notification, the UAS NF 220 may provide the detailed information (e.g., that UAS-related network slice is not authorized) according to the specific event notifications received from the AMF 182.
(6) At operation 4-2a', the AMF 182 may defer release of some, or any network resources used by the UAV 102 until receiving confirmation from the USS/UTM 240 via the UAS NF 220 (e.g., as an USS/UTM-triggered revocation of the UAV authorization). The decision to defer releases of the network resource may be based on the AMF 182 interacting/communicating with the PCF as described herein.
(7) At operation 4-2b, the SMF 183 may notify the UAS NF 220 (e.g., similar to the AMF 182 above) and at operation 4-2b' may defer release of some or any network resources used by the UAV 102 until receiving confirmation from the AMF 182 and/or the USS/UTM 240. The decision to defer release of network resources may be based on the SMF interacting/communicating with the PCF as described herein.
   If the NF does not receive a confirmation or an instruction from the USS/UTM 240 in a configured period of time, the NF may take one or more proper actions (e.g., a release network resource) in response to the event or events. As an example, the SMF 183 may perform one or more actions after a period of time during which no packets are received for the PDU Session used by the UAV (e.g., a policy-based inactivity time for the PDU Session (e.g., an inactivity detection time)). In another example, the AMF 182 may proceed with de-registration when detecting that there are no active PDU Sessions used for C2 communications based on, for example Session Management (SM) context information of the WTRU/UAV 102.
(8) At operation 4-3, the USS/UTM 240 may trigger a UAV authorization revocation procedure with the network to allow for graceful release of resources (e.g., upon mission termination, a grace period and/or the UAV 102 landing safely).

If the USS/UTM 240 has not subscribed to the event notification described herein, the 3GPP NFs (e.g., the AMF 182 and/or the SMF 183) may still inform the UAS NF 220 of those events (e.g., WTRU de-registration, subscription information change, and/or slice authorization revocation, etc.), based on one or more local network policies and/or configurations. The UAS NF 220 may send unsolicited event notifications to the USS/UTM 240. For example, the 3GPP NFs may take actions in response to the events without waiting for the USS/UTM instructions and/or confirmations. The UAS NF 220 may take into consideration other criteria based on policy and/or WTRU context information (e.g., that the PDU Session used for C2 Communication is inactive and/or the lack of such a PDU Session) before taking actions in response to the events.

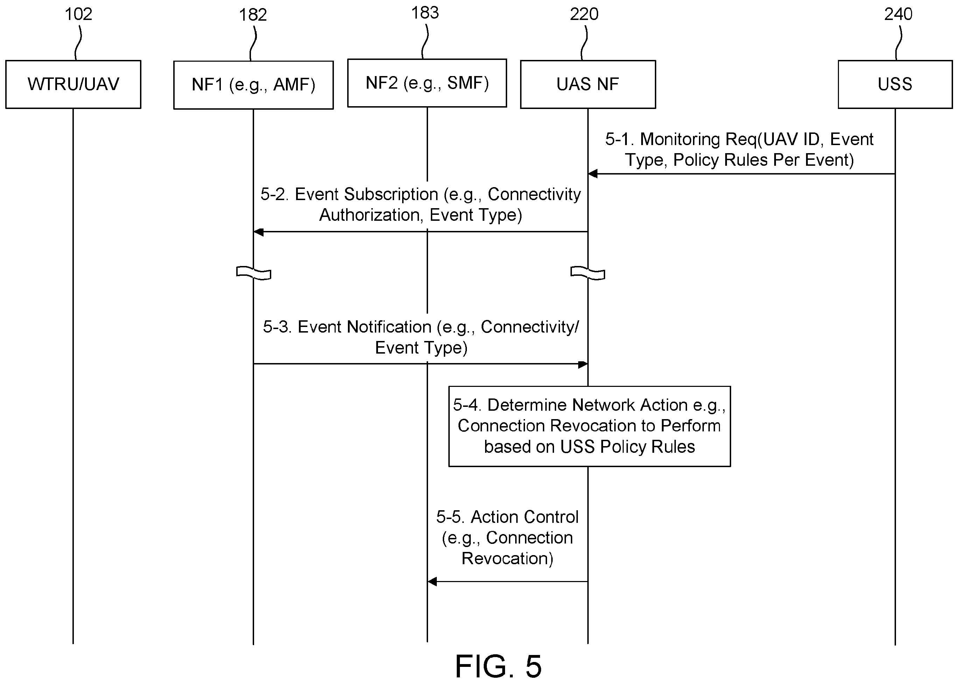

FIG. 5 is a diagram illustrating a representative UAS control procedure

Referring to FIG. 5, the UAS control procedure may include any of the following.
(1) At operation 5.1, the UAS NF 220 may receive a monitoring request message from the USS/UTM 240. The message may include/indicate any of: the UAV ID (e.g., the 3GPP UAV ID or another identifier), one or more event types and/or a policy rule per event, for example, to determine using the policy, network action/triggering conditions by the UAS NF 220.
(2) At operation 5.2, the UAS NF 220 may send an event subscription to a network function (NF) (e.g., the AMF 182 and/or the SMF 183). The event subscription may include, for example information indicating a connectivity authorization and an event type (e.g., location event).
(3) At operation 5.3, the NF/AMF 182/SMF 183 may send an event notification including information indicating (1) that the event subscribed by the UAS NF 220 in the event subscription has occurred, (2) connectivity and/or location event information.
(4) At operation 5-4, after receiving the event notification from the NF/AMF 182/SMF 183, the UAS NF 220 may determine a network action (for example whether to end/revoke a connection with a WTRU/UAV 102) based on the policy rules associated with the event/event type received from the USS/UTM 240.
(5) At operation 5-5, the UAS NF 220 may send information indicating a control action, for example (1) connection revocation information to determine a network action (for example whether to end/revoke a connection with a WTRU/UAV 102) based on the policy rules associated with the event/event type received from the USS/UTM 240. When the relevant event occurs for the UAV, the AMF182/SMF 183 may interact/communicate with the UAS NF 220 to report the event type (e.g., connectivity authorization revocation) and associated information. The UAS NF 220 may provide one or more actions (e.g., control actions) to be performed to the AMF182/SMF 183 (e.g., (1) to immediately revoke the connection/release network resources for the UAV or (2) to hold/defer the connection revocation/network resources release upon an USS/UTM confirmation/command). For example, the NFs may take actions in response to the events without waiting for the USS/UTM instructions and/or confirmations. The UAS NF 220 may take into consideration other criteria based on policy and/or WTRU context information.

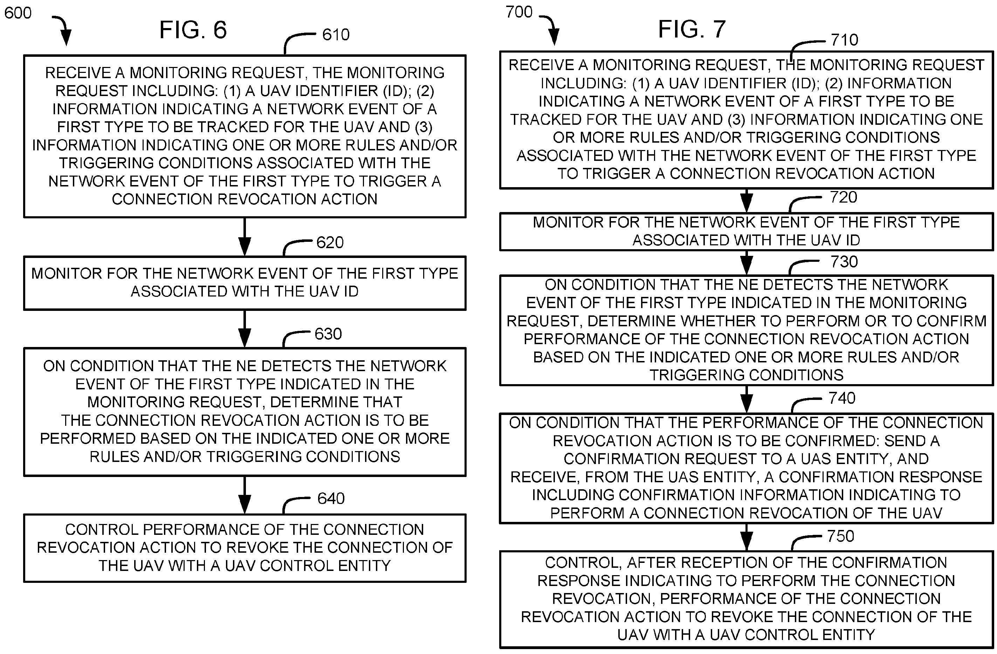

FIG. 6 is a flowchart illustrating a representative procedure to control a revocation of a connection of a UAV.

Referring to FIG. 6, the representative procedure 600 may include, at block 610, a Network Entity (NE) 220 (e.g., a UAS NF entity) receiving a monitoring request. The monitoring request may include: (1) a UAV identifier (ID); (2) information indicating a network event of a first type to be tracked for the UAV 102 and (3) information indicating one or more rules and/or triggering conditions associated with the network event of the first type to trigger a connection revocation action. At block 620, the NE 220 may monitor for the network event of the first type associated with the UAV ID. At block 630, the NE 220, on condition that the NE 220 detects the network event of the first type indicated in the monitoring request, may determine that the connection revocation action is to be performed based on the indicated one or more rules and/or triggering conditions. At block 640, the NE 220 may control performance of the connection revocation action to revoke the connection of the UAV 102 with a UAV control entity (e.g., a USS/UTM 240 and/or a UAV-C).

In certain representative embodiments, the NE 220 may include an Unmanned Aerial System (UAS) Network Function (NF). In certain representative embodiments, the reception of the monitoring request may be sent from the UAV control entity (e.g., the USS/UTM 240).

In certain representative embodiments, the network event of the first type may be one of a plurality of types of events. For example, the plurality of types of events may include any of: (1) a service available/authorized event type; (2) an abnormal event type; (3) a registration event type; (4) a deregistration event type; (5) an aerial subscription revocation event type; (6) an aerial subscription event type; (7) a network slice authorization event type; (8) a network slice revocation event type; (9) a connectivity service authorization event type; and/or (10) a link Quality of Service (QoS) variation event type.

In certain representative embodiments, the determination that the connection revocation action is to be performed may include one of: (1) determining that the connection revocation action without a revocation confirmation is to be performed based on the indicated one or more rules and/or triggering conditions; or (2) determining that the connection revocation action is to be performed after the revocation confirmation is received by: (a) the NE 220 sending a confirmation request to any of: (i) a UAS Service Supplier (USS) and/or (ii) a UAS Traffic Management (UTM); and/or (b) receiving a confirmation response including confirmation information (e.g., a USS/UTM 240) The determination that the connection revocation action is to be performed may be further based on the received confirmation information.

In certain representative embodiments, the control of the performance of the connection revocation action may include sending, to a further NE 182/183, a command to revoke the connection of the UAV 102.

In certain representative embodiments, the further NE 182/183 may include any of: (1) an Access and Mobility Management Function (AMF) 182 and/or (2) a Session Management Function (SMF) 183.

In certain representative embodiments, the UAV ID may correspond to any of: (1) a UAV 102, (2) an aerial drone (e.g., with at least certain WTRU functionality); (3) an autonomous vehicle (e.g., with at least certain WTRU functionality); and/or (4) an emergency vehicle (e.g., with at least certain WTRU functionality).

In certain representative embodiments, the indicated one or more rules and/or triggering conditions associated with the network event of the first type may relate to any of:(1) a subscription authorization revocation, (2) a subscription authorization change, (3) a network slice authorization revocation and/or (4) a network slice authorization change.

FIG. 7 is a flowchart illustrating a representative procedure to control a revocation of a connection of a UAV.

Referring to FIG. 7, the representative procedure 700 may include, at block 710, a Network Entity 220 (NE) (e.g., a UAS NF entity) receiving a monitoring request. For example, the monitoring request may include: (1) a UAV identifier (ID); (2) information indicating a network event of a first type to be tracked for the UAV 102 and (3) information indicating one or more rules and/or triggering conditions associated with the network event of the first type to trigger a connection revocation action. At block 720, the NE 220 may monitor for the network event of the first type associated with the UAV ID. At block 730, the NE 220, on condition that the NE 220 detects the network event of the first type indicated in the monitoring request, may determine whether to perform or to confirm performance of the connection revocation action based on the indicated one or more rules and/or triggering conditions. At block 740, the NE 220, on condition that the performance of the connection revocation action is to be confirmed may: (1) send a confirmation request to a UAS entity 240 (e.g., the USS/UTM), and may receive, from the UAS entity 240, a confirmation response including confirmation information indicating to perform a connection revocation of the UAV 102. At block 750, the NE 220 may control, after reception of the confirmation response indicating to perform the connection revocation, performance of the connection revocation action to revoke the connection of the UAV 102 with a UAV control entity (e.g., USS/UTM 240 and/or UAV-C).

In certain representative embodiments, the NE 220 may include an Unmanned Aerial System (UAS) Network Function (NF).

In certain representative embodiments, the UAV control entity may be a USS, UTM and/or a UAV-C.

In certain representative embodiments, the network event of the first type may be one of a plurality of types of events. For example, the plurality of types of events may include any of: (1) a service available/authorized event type; (2) an abnormal event type; (3) a registration event type; (4) a deregistration event type; (5) an aerial subscription revocation event type; (6) an aerial subscription event type; (7) a network slice authorization event type; (8) a network slice revocation event type; (9) a connectivity service authorization event type; and/or (10) a link Quality of Service (QoS) variation event type.

In certain representative embodiments, the control of the performance of the connection revocation action may include sending, to a further NE 182/183, a command to revoke a connection of the UAV 102.

In certain representative embodiments, the further NE 182/183 may include any of: (1) an Access and Mobility Management Function (AMF) and/or (2) a Session Management Function (SMF).

In certain representative embodiments, the UAV ID may correspond to any of: (1) a UAV 102, an aerial drone; (3) an autonomous vehicle; and/or (4) an emergency vehicle (e.g., devices that may include a WTRU or WTRU functionality).

In certain representative embodiments, the indicated one or more rules and/or triggering conditions associated with the network event of the first type may relate to any of:(1) a subscription authorization revocation, (2) a subscription authorization change, (3) a network slice authorization revocation and/or (4) a network slice authorization change.

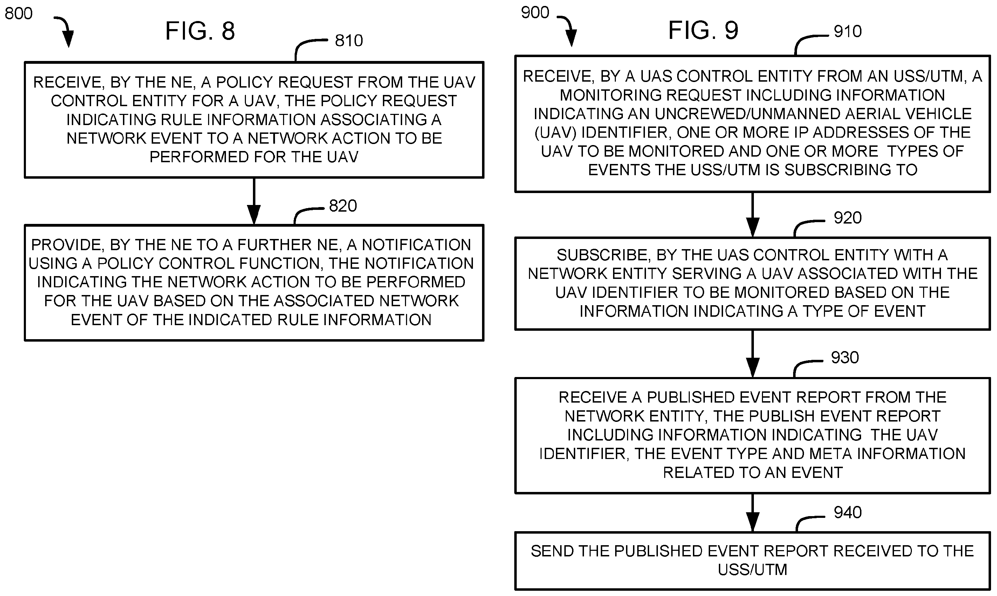

FIG. 8 is a flowchart illustrating a representative procedure to provide a UAV policy control exposure service to a UAV control entity.

Referring to FIG. 8, the representative procedure 800 may include, at block 810, the NE 220 (e.g., a UAS-NF entity) receiving a policy request from the UAV control entity 240 (e.g., a USS and/or UTM) for a UAV 102. For example, the policy request may indicate rule information associating a network event to a network action to be performed for the UAV 102. At block 820, the NE 220 may provide, to a further NE 182/183 (e.g., the AMF and/or the SMF), a notification using a Policy Control Function. For example, the notification may indicate the network action to be performed for the UAV based on the associated network event of the indicated rule information.

In certain representative embodiments, the NE 220 may include an Unmanned Aerial System (UAS) Network Function (NF).

In certain representative embodiments, the UAV control entity 240 may include any of: (1) a UAS Service Supplier (USS) and/or (2) a UAS Traffic Management (UTM).

In certain representative embodiments, the further NE 182/183 may include any of: (1) an Access and Mobility Management Function (AMF) and/or (2) a Session Management Function (SMF).

FIG. 9 is a flowchart illustrating a representative procedure implemented by an uncrewed/unmanned aerial system (UAS) control entity.

Referring to FIG. 9, the representative procedure 900 may include, at block 910, a UAS control entity 220, receiving from a USS/UTM 240, a monitoring request including information indicating an uncrewed/unmanned aerial vehicle (UAV) identifier, one or more IP addresses of the UAV 102 to be monitored and one or more types of events the USS/UTM 240 is subscribing to. At block 920, the UAS control entity 220 may subscribe with a network entity 182/183 serving a UAV 102 associated with the UAV identifier to be monitored based on the information indicating a type of event. At block 930, the UAS control entity 220 may receive a published event report from the network entity 182/183. For example, the publish event report may include information indicating the UAV identifier, the event type and meta information related to an event. At block 940, the UAS control entity 220 may send the published event report received to the USS/UTM 240.

In certain representative embodiments, the type of event may be associated with any of: (1) a UAV service, (2) a drone service, (3) an autonomous vehicle service; (4) an emergency service and/or (5) an Ultra Reliable Low Latency (URLLC) service.

In certain representative embodiments, the type of event is one of: (1) a first type of event or (2) a second type of event. For example, the first type of event may be a connectivity service authorization event and/or the second type of event may be a Command and Control (C2) link Quality of Service (QoS) variation event.

In certain representative embodiments, the network entity 182/183 may include any of: (1) an Access and Mobility Management Function (AMF) and/or (2) a Session Management Function (SMF).

In certain representative embodiments, the UAS control entity 220 subscribing with the network entity 182/183 serving the UAV 102 may include the UAS control entity 220 subscribing with the AMF (e.g., AMF entity 182) for the first type of event and/or the UAS control entity 220 subscribing with the SMF (e.g., the SMF entity 183) for the second type of event.

In certain representative embodiments, the UAS control entity 220 may include a UAS network function (NF).

In certain representative embodiments, the type of event may be a generic event type and the UAS control entity 220 may translate the generic event type to one or more specific event types.

In certain representative embodiments, the UAS control entity 220 may determine a network function associated with the one or more specific event types.

In certain representative embodiments, the sending of the published event report type may include sending of the published event report to at least the determined network function.

The various NEs and the UAS control entity each include a processor, a transmit/receive unit, and a storage unit, and may be configured to execute the various operations/procedures/methods discussed herein.

Systems and methods for processing data according to representative embodiments may be performed by one or more processors executing sequences of instructions contained in a memory device. Such instructions may be read into the memory device from other computer-readable mediums such as secondary data storage device(s). Execution of the sequences of instructions contained in the memory device causes the processor to operate, for example, as described above. In alternative embodiments, hard-wire circuitry may be used in place of or in combination with software instructions to implement the present invention. Such software may run on a processor which is housed within a robotic assistance/apparatus (RAA) and/or another mobile device remotely. In the later a case, data may be transferred via wireline or wirelessly between the RAA or other mobile device containing the sensors and the remote device containing the processor which runs the software which performs the scale estimation and compensation as described above. According to other representative embodiments, some of the processing described above with respect to localization may be performed in the device containing the sensors/cameras, while the remainder of the processing may be performed in a second device after receipt of the partially processed data from the device containing the sensors/cameras.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the representative embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods. It should be understood that the representative embodiments are not limited to the above-mentioned platforms or CPUs and that other platforms and CPUs may support the provided methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost vs. efficiency tradeoffs. There may be various vehicles by which processes and/or systems and/or other technologies described herein may be affected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

The present disclosure is not to be limited in terms of the particular embodiments described in this application, which are intended as illustrations of various aspects. Many modifications and variations may be made without departing from its scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of any UE recited herein, are provided below with respect to FIGS. 1A-1D.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mate-able and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Throughout the disclosure, one of skill understands that certain representative embodiments may be used in the alternative or in combination with other representative embodiments.

In addition, the methods described herein may be implemented in a computer program, software, or firmware incorporated in a computer readable storage medium as instructions for execution by a computer or processor to perform the actions described hereinabove. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method implemented by a Network Entity (NE) to control a revocation of a connection of an Unmanned Aerial Vehicle (UAV), the method comprising:
receiving a monitoring request, the monitoring request including: (1) a UAV identifier (ID); (2) information indicating a network event of a first type to be tracked for the UAV and (3) information indicating one or more rules or triggering conditions associated with the network event of the first type to trigger a connection revocation action;
monitoring the network event of the first type associated with the UAV ID;
on condition that the NE detects the network event of the first type indicated in the monitoring request, determining that the connection revocation action is to be performed based on the one or more rules or triggering conditions associated with the network event of the first type; and
sending a message to control performance of the connection revocation action to revoke the connection of the UAV with a UAV control entity.

2. A network entity (NE), comprising:
means for receiving a monitoring request, the monitoring request including: (1) a UAV identifier (ID); (2) information indicating a network event of a first type to be tracked for the UAV and (3) information indicating one or more rules or triggering conditions associated with the network event of the first type to trigger a connection revocation action;
means for monitoring the network event of the first type associated with the UAV ID;
means for determining , on condition that the NE detects the network event of the first type indicated in the monitoring request, that the connection revocation action is to be performed based on the one or more rules or triggering conditions associated with the network event of the first type; and
means for sending a message to control performance of the connection revocation action to revoke the connection of the UAV with a UAV control entity.

3. The method of claim 1, or the NE of claim 2, wherein:
the NE includes an Unmanned Aerial System (UAS) Network Function (NF); and
the reception of the monitoring request is from the UAV control entity.

4. The method of any of claims 1 and 3, or the NE of any of claims 2 and 3, wherein:
the network event of the first type is one of a plurality of types of events; and
the plurality of types of events including any of: (1) a service available/authorized event type; (2) an abnormal event type; (3) a registration event type; (4) a deregistration event type; (5) an aerial subscription revocation event type; (6) an aerial subscription event type; (7) a network slice authorization event type; (8) a network slice revocation event type; (9) a connectivity service authorization event; and/or (10) a link Quality of Service (QoS) variation event.

5. The method of any of claims 1 and 3-4, wherein:
the determining that the connection revocation action is to be performed includes one of:
determining that the connection revocation action without a revocation confirmation is to be performed based on the indicated one or more rules and/or triggering conditions; or
determining that the connection revocation action is to be performed after the revocation confirmation is received by:
sending a confirmation request to any of: (1) a UAS Service Supplier (USS) and/or (2) a UAS Traffic Management (UTM), and
receiving a confirmation response including confirmation information such that the determining that the connection revocation action is to be performed is further based on the received confirmation information.

6. The method of any of claims 1 and 3-5, wherein sending the message to control performance of the connection revocation action includes sending, to a further NE, a command to revoke the connection of the UAV.

7. The NE of any of claims 2-4, wherein:
the means for determining that the connection revocation action is to be performed includes one of:
means for determining that the connection revocation action without a revocation confirmation is to be performed based on the indicated one or more rules and/or triggering conditions; or
means for determining that the connection revocation action is to be performed after the revocation confirmation is received by:
sending a confirmation request to any of: (1) a UAS Service Supplier (USS) and/or (2) a UAS Traffic Management (UTM), and
receiving a confirmation response including confirmation information such that the determining that the connection revocation action is to be performed is further based on the received confirmation information.

8. The NE of any of claims 2-4 and 7, wherein the means for sending the message to control performance of the connection revocation action includes means for sending, to a further NE, a command to revoke the connection of the UAV.

9. The method of claim 6, or the NE of claim 8, wherein the further NE includes any of: (1) an Access and Mobility Management Function (AMF) and/or (2) a Session Management Function (SMF).

10. The method of any of claims 1, 3-6 and 9, or the NE of any of claims 2-4 and 7-9, wherein the UAV ID corresponds to any of: (1) a UAV; (2) an aerial drone; (3) an autonomous vehicle; and/or (4) an emergency vehicle.

11. The method of any of claims 1, 3-6 and 9-10, or the NE of any of claims 2-4 and 7-10, wherein the indicated one or more rules or triggering conditions associated with the network event of the first type relate to any of:(1) a subscription authorization revocation, (2) a subscription authorization change, (3) a network slice authorization revocation and/or (4) a network slice authorization change.

12. The method of any of claims 1, 3-6 and 9-11, comprising:
sending a confirmation request to an Unmanned Aerial System (UAS) entity, and
receiving, from the UAS entity, a confirmation response including confirmation information indicating to perform the connection revocation of the UAV;
wherein the sending of the message to control performance of the connection revocation action is performed after reception of the confirmation response indicating to perform the connection revocation.

13. The NE of any of claims 2-4 and 7-11, comprising:
means for sending a confirmation request to an Unmanned Aerial System (UAS) entity; and
means for receiving, from the UAS entity, a confirmation response including confirmation information indicating to perform the connection revocation of the UAV;
wherein the message to control performance of the connection revocation action is sent after reception of the confirmation response indicating to perform the connection revocation.

## Patentansprüche

1. Ein Verfahren, das durch eine Netzwerkentität, NE, implementiert wird, um einen Widerruf einer Verbindung eines unbemannten Luftfahrzeugs, UAV, zu steuern, das Verfahren umfassend:
Empfangen einer Überwachungsanforderung, die Überwachungsanforderung umfassend: (1) einen UAV-Identifizierer, ID; (2) Informationen, die ein Netzwerkereignis eines ersten Typs anzeigen, das für das UAV zu verfolgen ist, und (3) Informationen, die eine oder mehrere Regeln oder Auslösebedingungen anzeigen, die dem Netzwerkereignis des ersten Typs zugeordnet sind, um eine Verbindungswiderrufsaktion auszulösen;
Überwachen des Netzwerkereignisses des ersten Typs, das dem UAV-ID zugeordnet ist;
unter der Bedingung, dass das NE das Netzwerkereignis des ersten Typs detektiert, das in der Überwachungsanforderung angezeigt wird,
Bestimmen, dass die Verbindungswiderrufsaktion auszuführen ist, basierend auf der einen oder den mehreren Regeln oder Auslösebedingungen, die dem Netzwerkereignis des ersten Typs zugeordnet sind; und
Senden einer Nachricht, um die Ausführung der Verbindungswiderrufsaktion zu steuern, um die Verbindung des UAV mit einer UAV-Steuerentität zu widerrufen.

2. Eine Netzwerkentität, NE, umfassend:
Mittel zum Empfangen einer Überwachungsanforderung, die Überwachungsanforderung umfassend: (1) einen UAV-Identifizierer, ID; (2) Informationen, die ein Netzwerkereignis eines ersten Typs anzeigen, das für das UAV zu verfolgen ist, und (3) Informationen, die eine oder mehrere Regeln oder Auslösebedingungen anzeigen, die dem Netzwerkereignis des ersten Typs zugeordnet sind, um eine Verbindungswiderrufsaktion auszulösen;
Mittel zum Überwachen des Netzwerkereignisses des ersten Typs, das dem UAV-ID zugeordnet ist;
Mittel zum Bestimmen, unter der Bedingung, dass das NE das Netzwerkereignis des ersten Typs detektiert, das in der Überwachungsanforderung angezeigt wird, dass die Verbindungswiderrufsaktion auszuführen ist, basierend auf der einen oder den mehreren Regeln oder Auslösebedingungen, die dem Netzwerkereignis des ersten Typs zugeordnet sind; und
Mittel zum Senden einer Nachricht, um die Ausführung der Verbindungswiderrufsaktion zu steuern, um die Verbindung des UAV mit einer UAV-Steuerentität zu widerrufen.

3. Das Verfahren gemäß Anspruch 1 oder die NE gemäß Anspruch 2, wobei:
die NE eine Unbemanntes-Luftfahrtsystem-, UAS, Netzwerkfunktion, NF, umfasst; und
der Empfang der Überwachungsanforderung von der UAV-Steuerentität ist.

4. Das Verfahren gemäß einem der Ansprüche 1 und 3 oder die NE gemäß einem der Ansprüche 2 und 3, wobei:
das Netzwerkereignis des ersten Typs einer von einer Mehrzahl von Ereignistypen ist; und
die Mehrzahl von Ereignistypen irgendeines umfasst von: (1) einem dienstverfügbaren/autorisierten Ereignistyp; (2) einem anormalen Ereignistyp; (3) einem Registrierungsereignistyp; (4) einem Deregistrierungsereignistyp; (5) einem Luftfahrt-Abonnement-Widerrufsereignistyp; (6) einem Luftfahrt-Abonnement-Ereignistyp; (7) einem Netzwerk-Slice-Autorisierungsereignistyp; (8) einem Netzwerk-Slice-Widerrufsereignistyp; (9) einem Konnektivitätsdienstautorisierungsereignis; und/oder (10) einem Link-Quality-of-Service-, QoS, Variationsereignis.

5. Das Verfahren gemäß einem der Ansprüche 1 und 3-4, wobei:
das Bestimmen, dass die Verbindungswiderrufsaktion auszuführen ist, eines umfasst von:
Bestimmen, dass die Verbindungswiderrufsaktion ohne eine Widerrufsbestätigung auszuführen ist, basierend auf der einen oder den mehreren angezeigten Regeln und/oder Auslösebedingungen; oder
Bestimmen, dass die Verbindungswiderrufsaktion auszuführen ist, nachdem die Widerrufsbestätigung empfangen wurde, durch:
Senden einer Bestätigungsanforderung an irgendeines von: (1) einem UAS-Dienstanbieter, USS, und/oder (2) einem UAS-Verkehrsmanagement, UTM, und
Empfangen einer Bestätigungsantwort, die Bestätigungsinformationen umfasst, sodass das Bestimmen, dass die Verbindungswiderrufsaktion auszuführen ist, ferner auf den empfangenen Bestätigungsinformationen basiert.

6. Das Verfahren gemäß einem der Ansprüche 1 und 3-5, wobei das Senden der Nachricht, um die Ausführung der Verbindungswiderrufsaktion zu steuern, ein Senden, an eine weitere NE, eines Befehls umfasst, die Verbindung des UAV zu widerrufen.

7. Die NE gemäß einem der Ansprüche 2-4, wobei:
die Mittel zum Bestimmen, dass die Verbindungswiderrufsaktion auszuführen ist, eines umfassen von:
Mittel zum Bestimmen, dass die Verbindungswiderrufsaktion ohne eine Widerrufsbestätigung auszuführen ist, basierend auf der einen oder den mehreren angezeigten Regeln und/oder Auslösebedingungen; oder
Mittel zum Bestimmen, dass die Verbindungswiderrufsaktion auszuführen ist, nachdem die Widerrufsbestätigung empfangen wurde, durch:
Senden einer Bestätigungsanforderung an eines von: (1) einem UAS-Dienstanbieter, USS, und/oder (2) einem UAS-Verkehrsmanagement, UTM, und
Empfangen einer Bestätigungsantwort, die Bestätigungsinformationen umfasst, sodass das Bestimmen, dass die Verbindungswiderrufsaktion auszuführen ist, ferner auf den empfangenen Bestätigungsinformationen basiert.

8. Die NE gemäß einem der Ansprüche 2-4 und 7, wobei die Mittel zum Senden der Nachricht, um die Ausführung der Verbindungswiderrufsaktion zu steuern, Mittel zum Senden, an eine weitere NE, eines Befehls umfassen, die Verbindung des UAV zu widerrufen.

9. Das Verfahren gemäß Anspruch 6 oder die NE gemäß Anspruch 8, wobei die weitere NE irgendeines umfasst von: (1) einer Zugangs- und Mobilitätsmanagementfunktion, AMF, und/oder (2) einer Sitzungsmanagementfunktion, SMF.

10. Das Verfahren gemäß einem der Ansprüche 1, 3-6 und 9 oder die NE gemäß einem der Ansprüche 2-4 und 7-9, wobei der UAV-ID irgendeinem entspricht von: (1) einem UAV; (2) einer Flugdrohne; (3) einem autonomen Fahrzeug; und/oder (4) einem Einsatzfahrzeug.

11. Das Verfahren gemäß einem der Ansprüche 1, 3-6 und 9-10 oder die NE gemäß einem der Ansprüche 2-4 und 7-10, wobei die eine oder die mehreren angezeigten Regeln oder Auslösebedingungen, die dem Netzwerkereignis des ersten Typs zugeordnet sind, irgendeines betreffen von: (1) einem Abonnement-Autorisierungswiderruf, (2) einer Abonnement-Autorisierungsänderung, (3) einem Netzwerk-Slice-Autorisierungswiderruf und/oder (4) einer Netzwerk-Slice-Autorisierungsänderung.

12. Das Verfahren gemäß einem der Ansprüche 1, 3-6 und 9-11, umfassend:
Senden einer Bestätigungsanforderung an eine Unbemanntes-Luftfahrtsystem-, UAS, Entität, und
Empfangen, von der UAS-Entität, einer Bestätigungsantwort, die Bestätigungsinformationen umfasst, die anzeigen, den Verbindungswiderruf des UAV auszuführen;
wobei das Senden der Nachricht, die Ausführung der Verbindungswiderrufsaktion zu steuern, nach dem Empfang der Bestätigungsantwort ausgeführt wird, die anzeigt, den Verbindungswiderruf auszuführen.

13. Die **NE** gemäß einem der Ansprüche 2-4 und 7-11, umfassend:
Mittel zum Senden einer Bestätigungsanforderung an eine Unbemanntes-Luftfahrtsystem-, UAS, Entität; und
Mittel zum Empfangen, von der UAS-Entität, einer Bestätigungsantwort, die Bestätigungsinformationen umfasst, die anzeigen, den Verbindungswiderruf des UAV auszuführen;
wobei die Nachricht, die Ausführung der Verbindungswiderrufsaktion zu steuern, nach dem Empfang der Bestätigungsantwort gesendet wird, die anzeigt, den Verbindungswiderruf auszuführen.

## Revendications

1. Procédé mis en œuvre par une entité de réseau, NE, pour commander une révocation d'une connexion d'un véhicule aérien sans pilote, UAV, le procédé comprenant le fait de :
recevoir une demande de surveillance, la demande de surveillance comprenant : (1) un identifiant, ID, d'UAV ; (2) des informations indiquant un événement de réseau d'un premier type à suivre pour l'UAV et (3) des informations indiquant une ou plusieurs règles ou conditions de déclenchement associées à l'événement de réseau du premier type pour déclencher une action de révocation de connexion ;
surveiller l'événement de réseau du premier type associé à l'ID d'UAV ;
à condition que la NE détecte l'événement de réseau du premier type indiqué dans la demande de surveillance,
déterminer que l'action de révocation de connexion doit être effectuée sur la base des une ou plusieurs règles ou conditions de déclenchement associées à l'événement de réseau du premier type ; et
envoyer un message pour commander l'exécution de l'action de révocation de connexion pour révoquer la connexion de l'UAV avec une entité de commande d'UAV.

2. Entité de réseau, NE, comprenant :
des moyens pour recevoir une demande de surveillance, la demande de surveillance comprenant : (1) un identifiant, ID, d'UAV ; (2) des informations indiquant un événement de réseau d'un premier type à suivre pour l'UAV et (3) des informations indiquant une ou plusieurs règles ou conditions de déclenchement associées à l'événement de réseau du premier type pour déclencher une action de révocation de connexion ;
des moyens pour surveiller l'événement de réseau du premier type associé à l'ID d'UAV ;
des moyens pour déterminer, à condition que la NE détecte l'événement de réseau du premier type indiqué dans la demande de surveillance, que l'action de révocation de connexion doit être effectuée sur la base des une ou plusieurs règles ou conditions de déclenchement associées à l'événement de réseau du premier type ; et
des moyens pour envoyer un message pour commander l'exécution de l'action de révocation de connexion pour révoquer la connexion de l'UAV avec une entité de commande d'UAV.

3. Procédé selon la revendication 1, ou NE selon la revendication 2, dans lequel :
la NE comprend une fonction de réseau, NF, de système aérien sans pilote, UAS ; et
la réception de la demande de surveillance provient de l'entité de commande d'UAV.

4. Procédé selon l'une des revendications 1 et 3, ou **NE** selon l'une des revendications 2 et 3, dans lequel :
l'événement de réseau du premier type est l'un parmi une pluralité de types d'événements ; et
la pluralité de types d'événements comprend l'un parmi : (1) un type d'événement disponible/autorisé de service ; (2) un type d'événement anormal ; (3) un type d'événement d'enregistrement ; (4) un type d'événement de désenregistrement ; (5) un type d'événement de révocation d'abonnement aérien ; (6) un type d'événement d'abonnement aérien ; (7) un type d'événement d'autorisation de tranche de réseau ; (8) un type d'événement de révocation de tranche de réseau ; (9) un événement d'autorisation de service de connectivité ; et/ou (10) un événement de variation de qualité de service, QoS, de liaison.

5. Procédé selon l'une des revendications 1 et 3 à 4, dans lequel :
la détermination que l'action de révocation de connexion doit être effectuée comprend l'un parmi :
déterminer que l'action de révocation de connexion sans confirmation de révocation doit être effectuée sur la base des une ou plusieurs règles et/ou conditions de déclenchement indiquées ; ou
déterminer que l'action de révocation de connexion doit être effectuée après que la confirmation de révocation est reçue par :
l'envoi d'une demande de confirmation à l'un parmi : (1) un fournisseur de services UAS, USS, et/ou (2) une gestion de trafic UAS, UTM, et
la réception d'une réponse de confirmation comprenant des informations de confirmation de sorte que la détermination que l'action de révocation de connexion doit être effectuée est en outre basée sur les informations de confirmation reçues.

6. Procédé selon l'une des revendications 1 et 3 à 5, dans lequel l'envoi du message pour commander l'exécution de l'action de révocation de connexion comprend l'envoi, à une autre **NE,** d'une commande pour révoquer la connexion de l'UAV.

7. **NE** selon l'une des revendications 2 à 4, dans laquelle :
les moyens pour déterminer que l'action de révocation de connexion doit être effectuée comprennent l'un parmi :
des moyens pour déterminer que l'action de révocation de connexion sans confirmation de révocation doit être effectuée sur la base des une ou plusieurs règles et/ou conditions de déclenchement indiquées ; ou
des moyens pour déterminer que l'action de révocation de connexion doit être effectuée après que la confirmation de révocation est reçue par :
l'envoi d'une demande de confirmation à l'un parmi : (1) un fournisseur de services UAS, USS, et/ou (2) une gestion de trafic UAS, UTM, et
la réception d'une réponse de confirmation comprenant des informations de confirmation de sorte que la détermination que l'action de révocation de connexion doit être effectuée est en outre basée sur les informations de confirmation reçues.

8. **NE** selon l'une des revendications 2 à 4 et 7, dans laquelle les moyens pour envoyer le message pour commander l'exécution de l'action de révocation de connexion comprennent des moyens pour envoyer, à une autre **NE,** une commande pour révoquer la connexion de l'UAV.

9. Procédé selon la revendication 6, ou **NE** selon la revendication 8, dans lequel l'autre **NE** comprend l'une parmi : (1) une fonction de gestion d'accès et de mobilité, AMF, et/ou (2) une fonction de gestion de session, SMF.

10. Procédé selon l'une des revendications 1, 3 à 6 et 9, ou **NE** selon l'une des revendications 2 à 4 et 7 à 9, dans lequel l'ID d'UAV correspond à l'un parmi : (1) un UAV ; (2) un drone aérien ; (3) un véhicule autonome ; et/ou (4) un véhicule d'urgence.

11. Procédé selon l'une des revendications 1, 3 à 6 et 9 à 10, ou **NE** selon l'une des revendications 2 à 4 et 7 à 10, dans lequel les une ou plusieurs règles ou conditions de déclenchement indiquées associées à l'événement de réseau du premier type concernent l'un parmi : (1) une révocation d'autorisation d'abonnement, (2) un changement d'autorisation d'abonnement, (3) une révocation d'autorisation de tranche de réseau et/ou (4) un changement d'autorisation de tranche de réseau.

12. Procédé selon l'une des revendications 1, 3 à 6 et 9 à 11, comprenant le fait de :
envoyer une demande de confirmation à une entité de système aérien sans pilote, UAS, et
recevoir, à partir de l'entité UAS, une réponse de confirmation comprenant des informations de confirmation indiquant d'effectuer la révocation de connexion de l'UAV ;
dans lequel l'envoi du message pour commander l'exécution de l'action de révocation de connexion est effectué après la réception de la réponse de confirmation indiquant d'effectuer la révocation de connexion.

13. **NE** selon l'une des revendications 2 à 4 et 7 à 11, comprenant :
des moyens pour envoyer une demande de confirmation à une entité de système aérien sans pilote, UAS ; et
des moyens pour recevoir, à partir de l'entité UAS, une réponse de confirmation comprenant des informations de confirmation indiquant d'effectuer la révocation de connexion de l'UAV ;
dans laquelle le message pour commander l'exécution de l'action de révocation de connexion est envoyé après la réception de la réponse de confirmation indiquant d'effectuer la révocation de connexion.
